# EUROPÄISCHE PATENTSCHRIFT

(11) **EP 3 024 364 B1**
(45) Veröffentlichungstag und Bekanntmachung des Hinweises auf die Patenterteilung: **17.04.2019**
(21) Anmeldenummer: 14741565.7
(22) Anmeldetag: 16.07.2014
(51) Int. Cl.: A47J 31/36

(54) **SPINDELBRÜHEINHEIT MIT ZWANGSGESTEUERTER BRÜHKAMMER**
SPINDLE BREWING UNIT HAVING A BREWING CHAMBER SUBJECT TO POSITIVE CONTROL
UNITÉ D'INFUSION À BROCHE ÉQUIPÉE D'UNE CHAMBRE D'INFUSION À COMMANDE FORCÉE

(30) Priorität: 25.07.2013 DE 102013214578
(43) Veröffentlichungstag der Anmeldung: 01.06.2016
(73) Patentinhaber: BSH Hausgeräte GmbH, 81739 München (DE)
(72) Erfinder: GRIEB, Jöran, 83253 Rimsting (DE); HASLACHER, Christian, 5303 Thalgau (AT); HUBER, Michael, 6341 Ebbs (AT); STROBL, Robert, 83246 Unterwössen (DE)
(86) Internationale Anmeldenummer: PCT/EP2014/065218
(87) Internationale Veröffentlichungsnummer: WO 2015/010981

(56) Entgegenhaltungen:
- EP-A1- 1 774 883
- EP-A1- 2 055 214

## Beschreibung

Die Erfindung betrifft einen Kaffeevollautomaten, insbesondere einen solchen für Haushaltszwecke, mit einer Spindelbrüheinheit mit einer Brühkammer, mit einer Gewindespindel zum Antrieb der Brühkammer über einen Brühkammerträger als Spindelmutter, wobei die Brühkammer seitlich neben der Gewindespindel und derart angeordnet ist, dass sie in einer Verschwenkebene orthogonal zu der Spindelachse verschwenkbar und in einer Verfahrrichtung parallel zur Spindelachse verfahrbar ist.

Einen derartigen Kaffeevollautomaten offenbart die nachveröffentlichte Anmeldung mit dem Aktenzeichen DE 10 2013 202 148.8 des Anmelders. Sie betrifft im Wesentlichen eine Führungsvorrichtung, die das Verschwenken der Brühkammer in der Verschwenkebene einerseits und das Verfahren der Brühkammer in der Verfahrrichtung andererseits sequentiell, also getrennt voneinander und aufeinander folgend, bewirkt. Die Brühkammer wird verschwenkt, indem sie bei einer Rotation der Gewindespindel mitdreht, und zwar aufgrund der Haftreibung zwischen einem Innengewinde des Brühkammerträgers und dem Außengewinde der Gewindespindel. Die Gewindespindel dient also als unmittelbare Antriebsquelle für das Ausschwenken der Brühkammer, indem das Drehmoment der Gewindespindel auf die Brühkammer übertragen wird und sie ohne eine Über- oder Untersetzung in die gleiche Drehrichtung und um den gleichen Winkel verschwenkt. Grundsätzlich kann das Einschwenken der Brühkammer auf gleiche Weise unter Ausnutzung von Haftreibung und durch Rotation der Gewindespindel in der Gegenrichtung erfolgen. Der Stand der Technik offenbart zur Unterstützung des Verschwenkens ein Rückstellmittel, um zumindest einen Losbrechmoment für die Gegenbewegung zum Ausschwenken, nämlich für das Einschwenken, auszuüben. Als Rückstellmittel kann beispielsweise eine Schrauben-, Blatt- oder Drehfeder dienen, die beim Ausschwenken vorgespannt wird.

Aus der Druckschrift EP 1 774 883 A1 ist weiter eine Kaffeemaschine mit einem in lösbarer Weise montierbaren Brühkopf an Gewindespindeln bekannt.

Aufgabe der Erfindung ist es, das Verschwenken der Brühkammer weitgehend unabhängig von Haftreibung und damit zuverlässiger zu gestalten.

Diese Aufgabe wird bei dem eingangs genannten Kaffeevollautomaten erfindungsgemäß dadurch gelöst, dass er eine lösbare Kupplung zwischen der Spindel und der Brühkammer aufweist, die zum Verschwenken bzw. während des Verschwenkens der Brühkammer zumindest zeitweise aktiviert ist. Sie kann sowohl während des gesamten Verschwenkvorgangs als auch nur phasenweise, beispielsweise nur beim Ausschwenken oder nur zum Einschwenken aktiv sein. Denn das Aus- und Einschwenken der Brühkammer findet auf derselben Bewegungsbahn, aber in unterschiedlichen Richtungen statt. Für zumindest eine der beiden Bewegungen kann die Kupplung aktiv sein, während die Gegenrichtung herkömmlich, beispielsweise federkraftunterstützt, oder ebenfalls mit aktivierter Kupplung erfolgen kann.

Die Erfindung wendet sich also davon ab, sich auf eine ausreichende Haftreibung im Gewinde zwischen der Gewindespindel einerseits und der Brühkammer andererseits bzw. dem Brühkammerträger zu verlassen. Sie verfolgt vielmehr das Prinzip, eine definierte Kupplung zwischen der Spindel einerseits und der Brühkammer andererseits vorzusehen. Da die Kupplung nur während des horizontalen Aus- und/oder Einschwenkens gekoppelt ist, jedenfalls aber während des vertikalen Verfahrens der Brühkammer gelöst sein muss, lässt sich die Kupplung lösen. Das Aktivieren und das Lösen der Kupplung sind ansteuerbar, so dass jene während des vertikalen Verfahrens der Brühkammer zuverlässig deaktiviert ist.

Ihre Wirkung "zwischen der Spindel und der Brühkammer" ist funktional zu verstehen, wonach ihre koppelnde Wirkung jedenfalls von der Spindel auf die Brühkammer wirkt. Die Kupplung muss dazu nicht unmittelbar an der Spindel bzw. der Brühkammer selbst angebracht sein, sondern kann auch an Bestandteilen angeordnet sein, die der Spindel zuzuordnen sind bzw. solchen, die mit der Brühkammer starr gekoppelt sind, dort insbesondere am Brühkammerträger.

Die Kupplung bewirkt jedenfalls eine Übertragung des Drehmoments der Gewindespindel auf die Brühkammer bzw. den Brühkammerträger, ohne dazu auf die Haftreibung zwischen den Gewindegängen des Außengewindes der Gewindespindel einerseits und den Gewindegängen des Innengewindes des Brühkammerträgers andererseits zu setzen. Sie wirkt vielmehr zusätzlich zu dieser aus dem Stand der Technik bekannten Drehmomentenübertragung. Damit erreicht sie eine zwingende Verschwenkung der Brühkammer auch unabhängig von dem Bestehen einer ausreichenden Haftreibung in den genannten Gewindegängen. Denn über die Lebensdauer des Kaffeevollautomaten hinweg kann nicht ausgeschlossen werden, dass sich durch Verschmutzung nicht ein Widerstand auf die Brühkammer aufbaut, der durch die Haftreibung zwischen den Gewindegängen der Gewindespindel einerseits und dem Innengewinde des Brühkammerträgers andererseits zu überwinden wäre. Die erfindungsgemäße lösbare Kupplung stellt also eine zusätzliche Übertragung von Drehmomenten von der Spindel auf die Brühkammer zu Verfügung, die demgegenüber verschmutzungsunanfällig ausgebildet werden kann. Damit kann die Zuverlässigkeit des Kaffeevollautomaten gesteigert werden.

Erfindungsgemäß weist der Kaffeevollautomat eine selbsttätige Betätigung der Kupplung auf.

Grundsätzlich kann die lösbare Kupplung ihrerseits auf Haft- oder Reibschluss beruhen, beispielsweise durch eine Klemmvorrichtung. Durch eine Abschirmung der auf Kraftschluss beruhenden lösbaren Kupplung kann jene gegen Verschmutzung zumindest soweit geschützt werden, dass die für ihr Funktionieren erforderliche Haftreibung jedenfalls aufrechterhalten bleibt. Eine derartige Kupplung kann beispielsweise in einer Klemmverbindung ausgebildet sein, die den Kraftschluss durch Klemmung, und diese wiederum durch Federn, Keilwirkung, Verstiftung oder Presspassen erzeugt. Nach einer vorteilhaften Ausgestaltung der Erfindung beruht die lösbare Kupplung jedoch auf Formschluss. Er ist weniger verschmutzungsanfällig, so dass Schutzmaßnahmen gegen Verschmutzung weitgehend entfallen können, ohne dass die Zuverlässigkeit der lösbaren Kupplung insbesondere während der Lebensdauer des Kaffeevollautomaten Einbußen erleiden müsste.

Nach der Phase eines vertikalen Verfahrens in der Verfahrrichtung schließt sich regelmäßig die Verschwenkbewegung der Brühkammer an. Während des Verschwenkens ist die Kupplung zumindest zeitweise geschlossen bzw. aktiviert und muss rechtzeitig vor dem Verfahren der Brühkammer gelöst sein. Dazu können mechanische, elektromechanische oder elektrische Schalter angeordnet sein, die die Kupplung zwischen den beiden genannten einander richtungsfremden Bewegungen deaktiviert oder aktiviert. Eine Aktivierung der Kupplung findet in einem Zeitraum nach Abschluss der Verfahrbewegung in einer Abwärtsrichtung und damit bei einer Positionierung der Brühkammer an einem unteren Ende der Gewindespindel statt. Umgekehrt erfolgt eine Deaktivierung etwa am selben Ort, spätestens jedenfalls nach Abschluss einer horizontalen Verschwenkbewegung der Brühkammer. Nach der Erfindung verfügt der Kaffeevollautomat daher über Mittel für eine bevorzugt lageabhängige, selbsttätige Betätigung, nämlich Aktivierung oder Deaktivierung der Kupplung. Da die Kupplung in Zusammenhang mit einer Verschwenkbewegung der Brühkammer steht, kann sie vorzugsweise drehwinkelabhängig betätigt werden. Die Mittel zu ihrer Betätigung können folglich in Aktion treten, wenn die Brühkammer am unteren Ende der Gewindespindel bzw. sich am Ort für den Übergang von der Verfahrbewegung in die Verschwenkbewegung oder umgekehrt befindet. Da der Betätigungsvorgang zur Aktivierung oder zur Deaktivierung der Kupplung weitgehend am selben Ort liegen kann, kann eine aufwändige Ansteuerung der Kupplung, insbesondere eine Lageerfassung der Kupplung, an der verschwenkbaren Brühkammer bzw. an der sich drehenden Gewindespindel entfallen. Stattdessen kann vielmehr ein konstruktiv einfaches mechanisches Betätigungsmittel für die Kupplung angeordnet sein, die beispielsweise in Abhängigkeit vom Drehwinkel der Brühkammer, nämlich beim Erreichen einer Position der Brühkammer zwischen der Verschwenkbewegung einerseits und der Verfahrbewegung andererseits aktivierbar ist. Derartige Betätigungsmittel können auch weitgehend unabhängig von der Art der Kupplung ausgestaltet sein, also unabhängig davon, ob die Kupplung nach dem Kraftschluss- oder nach dem Formschlussprinzip arbeitet.

Nach einer weiteren vorteilhaften Ausgestaltung der Erfindung kann der Kaffeevollautomat über eine Formschlusskupplung verfügen, die Rastmittel als Kupplung zwischen der Spindel einerseits und der Brühkammer andererseits umfasst. Rastmittel stellen eine einfach zu betätigende formschlüssige Kupplung dar, die sich regelmäßig zum Aktivieren weitgehend selbsttätig lediglich durch eine aufeinander bezogene bzw. aufeinander zu gerichtete Bewegung der Rastmittel schließen lässt. Die Deaktivierung einer Rastmittelkupplung dagegen erfordert regelmäßig eine separate Betätigung, womit nur noch ein Betätigungsvorgang der Kupplung separat ausgelöst und dafür entsprechende Betätigungsmittel vorgesehen zu sein brauchen. Rastmittel als lösbare formschlüssige Kupplung vereinfachen damit den konstruktiven Aufwand des Kaffeevollautomaten.

Gewöhnliche Rastmittel umfassen einen in aller Regel gefedert gelagerten Rasthaken, der mit einer demgegenüber weitgehend feststehenden Rastnase zusammenwirkt, indem der Rasthaken bei geschlossener Kupplung mit einer Sicherungsfläche hinter eine Kontaktfläche an der Rastnase greift und dort anliegt. Dadurch kann insbesondere eine zugbelastbare Kupplung hergestellt werden. Durch weitere miteinander in Kontakt zu bringende Anlageflächen am Rasthaken und an der Rastnase kann auch eine Druckkraft an der Kupplung übertragen werden. Die Richtung der Zug- und/oder Druckkraft, die die Kupplung überträgt, kann als Belastungsrichtung der Kupplung oder als Kupplungslastrichtung bezeichnet werden. Zur Deaktivierung ist eine Betätigungskraft aufzubringen, die den Rasthaken gegen die Federkraft auslenkt und die Sicherungsfläche in einer tangentialen Richtung von der Kontaktfläche entfernt. Die Betätigungsrichtung verläuft regelmäßig orthogonal zur Kupplungslastrichtung.

Die Federlagerung des Rasthakens kann entweder in einer gelenkigen Lagerung mit einer Zug-, Druck- oder Drehmomentenbeaufschlagung des Rasthakens durch eine entsprechende Feder ausgebildet sein. Alternativ dazu kann der Rasthaken einen Biegeabschnitt umfassen, der aus einem elastischen Material ausgebildet ist, der nach einer Auslenkung einfedert.

Es sind unterschiedliche Rastkupplungsmechanismen bekannt, wonach der Rasthaken entweder in eine geschlossene Stellung der Kupplung vorgespannt ist und - wie oben erläutert - zum Lösen der Kupplung gegen die Federkraft ausgelenkt werden muss oder der Rasthaken kann in eine Öffnungsstellung der Kupplung vorgespannt sein und zur Aktivierung der Kupplung entgegen der Federkraft ausgelenkt werden. Beide Mechanismen sind für die erfindungsgemäße Kupplung nutzbar.

Nach einer vorteilhaften Ausgestaltung der Erfindung umfasst der Kaffeevollautomat einen in Aktivierungsrichtung der Kupplung federnd vorgespannt gelagerten Rasthaken und eine Rastnase als Rastmittel der Kupplung, wobei am Rasthaken eine in Kupplungslastrichtung geneigte Sicherungsfläche angebracht ist und eine Stützfläche zum Abstützen des Rasthakens zur Aktivierung der Kupplung vorgesehen ist. Die Stützfläche behindert also die Auslenkung des Rasthakens zumindest zeitweise, so dass er die Kupplung nicht ungewollt deaktiviert. Abweichend von bekannten Rastkupplungen wirkt also eine Betätigungskraft der erfindungsgemäßen Kupplung nicht etwa senkrecht zur Kupplungslastrichtung, sondern parallel mit ihr. Selbstverständlich muss auch der erfindungsgemäße Rasthaken senkrecht zur Kupplungslastrichtung ausgelenkt werden. Die zugehörige Betätigungskraft wird erfindungsgemäß jedoch durch die Schrägfläche am Rastmittel hervorgerufen, sobald eine Zugkraft in der Kupplungslastrichtung auf die Kupplung aufgebracht wird. Damit aber keine unerwünschte Auslenkung des Rasthakens eintritt, hält ihn die Stützfläche in der Aktivierungsposition. Zur Deaktivierung der Kupplung braucht die Stützfläche lediglich entfernt zu werden, so dass sich der Rasthaken unter Einfluss einer Zugbelastung in Kupplungslastrichtung an der Schrägfläche gleitend auslenken lässt und damit die Kupplung deaktiviert.

Alternativ dazu kann ein herkömmlich ausgebildeter Rasthaken mit senkrecht zur Kupplungsrastrichtung orientierter Sicherungsfläche in einer Deaktivierungsrichtung der Kupplung vorgespannt und eine Stützfläche vorgesehen sein, die den Rasthaken gegen seine Federvorspannung in eine Aktivierungsposition der Kupplung zwingt, also in eine Anlage an einer korrespondierende Rastnase oder Kontaktfläche. Damit lässt sich durch eine Relativbewegung der Kupplung gegenüber der Stützfläche eine Aktivierung oder eine Deaktivierung der Kupplung erreichen. Da es sich sowohl bei der Spindel als auch bei der Brühkammer um bewegbare bzw. bewegte Bestandteile des Kaffeevollautomaten handelt, kann eine Stützfläche an einem ihnen gegenüber feststehenden Bestandteil des Kaffeevollautomaten angeordnet sein, insbesondere an dessen Gehäuse. Damit kann eine lageabhängige Betätigung der Kupplung erreicht werden, so dass sich ein separater Aktor zur Betätigung der Kupplung, also zu ihrer Aktivierung oder Deaktivierung, erübrigen kann, was den Aufbau und die Wartung des Kaffeevollautomaten vereinfacht und die Herstellungskosten reduziert.

Die Auslenkrichtung des Rasthakens zur Aktivierung bzw. Deaktivierung der Kupplung kann in nahezu jede beliebige Richtung orientiert sein, solange sie eine zuverlässige Kopplung zwischen der Gewindespindel einerseits und der Brühkammer andererseits bewirkt. Ihre Orientierung richtet sich vor allem nach den Platzverhältnissen innerhalb des Kaffeevollautomaten und einer konstruktiv und herstellungsseitig günstigen Anordnung der Rastmittel und der Stützfläche. Nach einer weiteren vorteilhaften Ausgestaltung der Erfindung kann zur Ausbildung der Kupplung ein Rasthaken an der Spindel oder an der Brühkammer angeordnet sein, der mit einer Rastnase an der Brühkammer oder an der Spindel zusammenwirkt, wobei der Rasthaken zur Aktivierung oder Deaktivierung der Kupplung in einer Richtung parallel zur Spindelachse auslenkbar und federvorgespannt gelagert ist und seine Auslenkbewegung in Abhängigkeit von der Lage der Spindel oder der Brühkammer drehwinkelabhängig durch eine Stützfläche am Gehäuse gehemmt ist. Damit kann eine äußerst kompakte Kupplung erreicht werden, die einen einfachen Aufbau bei möglichst geringem Platzbedarf bietet.

Nach einer weiteren vorteilhaften Ausgestaltung der Erfindung kann die Gewindespindel einen Flansch an ihrem unteren Ende und einen axial vom Flansch abstehenden Rasthaken umfassen, der in einer Auslenkrichtung parallel zur Spindelachse federnd gelagert ist und eine in Umfangsrichtung geneigte Sicherungsfläche aufweist, wobei die Gewindespindel einen axial vom Flansch abstehenden Anschlag umfasst und der Brühkammerträger eine mit der Schrägfläche korrespondierende Kontaktfläche und eine mit dem Anschlag zusammenwirkende Schubfläche als Rastnase aufweist. Am Gehäuse umfasst der Kaffeevollautomat zudem eine gegenüber der Spindel feststehende Stützfläche, die eine Auslenkung des Rasthakens zumindest abschnittsweise blockiert. Die Anordnung der spindelseitigen Rastmittel der Kupplung in einem unteren Bereich der Gewindespindel ist deswegen vorteilhaft, weil die Betätigung der Kupplung zu einem Zeitpunkt stattfindet, an dem sich die Brühkammer in eben jenem unteren Bereich der Gewindespindel befindet. Auf dem Flansch lassen sich sowohl der Rasthaken als auch die Anschlagfläche günstig ausbilden und entsprechend den Erfordernissen, nämlich der Verschwenkbewegung der Brühkammer, und ggf. mehrfach positionieren.

Nach einer weiteren vorteilhaften Ausgestaltung der Erfindung kann der Flansch abschnittsweise zugleich als Federlagerung ausbildet sein. Er kann dazu aus einem geeigneten Material und in geeigneter Materialdicke ausgebildet und entsprechend einer geeignet dimensionierten Kreisbogenlänge und radial von der Gewindespindel bzw. dem übrigen Flansch getrennt sein, so dass er eine Federzunge ausbildet, an deren freien Ende der Rasthaken positioniert sein kann. Bei dieser spindelnahen Anordnung der spindelseitigen Rastmittel können die brühkammerseitigen Rastmittel der Kupplung vorteilhaft am Brühkammerträger ausgebildet sein, der als Spindelmutter auf der Gewindespindel läuft. Die korrespondierende Rastnase kann ohne großen Aufwand an einer Unterseite bzw. einem unteren Rand des Brühkammerträgers ausgebildet werden, so dass sich auch deren und die Herstellung der mit dem Anschlag an der Gewindespindel zusammenwirkenden Schubfläche in einem kostengünstigen Rahmen bewegt.

Bei einer Vertikalbewegung der Brühkammer ist die Kupplung, wie oben bereits erläutert, deaktiviert. Am unteren Ende der Vertikalbewegung, die regelmäßig mit dem unteren Ende der Gewindespindel zusammenfällt, beginnt die horizontale Verschwenkung der Brühkammer. Um die Verschwenkbewegung zu unterstützen, kann dafür die erfinderische Rastkupplung aktiviert werden. Dabei kann das Ausschwenken entweder durch eine Druckkraft oder eine Zugkraft in der Kupplungslastrichtung zumindest unterstützt werden. Frühestens sobald die Brühkammer in ihrer untersten Position angelangt ist, kann die Kupplung aktiviert werden. Ihre Aktivierung kann vorteilhafterweise die Rotation der Gewindespindel bewirken: Die Drehung der Gewindespindel kann beispielsweise den Rasthaken über die Rastnase schieben, bis seine Sicherungsfläche hinter die Kontaktfläche schnappt. Dafür muss der Rasthaken orthogonal zu seiner Bewegungsrichtung bzw. quer zur Kupplungslastrichtung ausgelenkt werden. Dazu kann er auf eine Rampe an der Rastnase aufgeschoben werden, bis er hinter die Rastnase springt. In einer Gegenrichtung zu dieser Bewegungsrichtung kann die jetzt aktivierte Kupplung eine Zugkraft übertragen.

Nach einer weiteren vorteilhaften Ausgestaltung der Erfindung kann der Rasthaken neben einer Zugkraft auch eine Druckkraft übertragen, um per Druckkraft den Brühkammerträger und die Brühkammer in der Gegenrichtung zur Zugkraftrichtung zu verschwenken. Dazu kann er nach Einschnappen seiner Sicherungsfläche mit einer ihr weitgehend gegenüberliegenden Schubfläche an einer Druckkontaktfläche am Brühkammerträger anliegen. Er kann damit eine Doppelfunktion als Zugglied und als Druckglied in der Kupplungslastrichtung übernehmen und dadurch den Aufbau der Kupplung vereinfachen und ihren Platzbedarf reduzieren. Alternativ dazu oder zusätzlich kann der Rasthaken von einer Druckkraftübertragung weitgehend oder vollständig entlastet sein, indem frühestens gleichzeitig mit dem Einschnappen des Rasthakens hinter die Rastnase der vom Flansch der Gewindespindel radial abstehende Anschlag an einer Schubfläche am Brühkammerträger anläuft. Dort kann die Druckkraft zusätzlich oder ausschließlich übertragen werden. Damit können der Rasthaken und die ihn tragende Zunge hauptsächlich oder ausschließlich auf die zu übertragende Zugkraft bemessen und damit ggf. geringer dimensioniert werden, um Platz und/oder Material zu sparen.

Auf dem Verschwenkweg wird die Rastnase parallel neben eine Stützfläche am Gehäuse geschoben. Kehrt nun die Gewindespindel ihre Drehrichtung um, beaufschlagt sie den Rasthaken mit einer Zugkraft und zieht den Rasthaken bzw. seine Sicherungsfläche gegen die Kontaktfläche. Da beide in Zugkraftrichtung schräg abwärts geneigt sind, wird der Rasthaken tendenziell nach außen bzw. abwärts und damit in eine Deaktivierungsrichtung gedrängt. Da aber eine orthogonal zur Drehrichtung gerichtete Auslenkbewegung des Rasthakens durch die neben ihm liegende Stützfläche verhindert wird, zieht der Rasthaken die Rastnase in Kupplungslastrichtung bzw. in Drehrichtung der Gewindespindel mit. Dabei wird die Brühkammer eingeschwenkt. Bei einer vollständig eingeschwenkten Position der Brühkammer endet die Sicherungsfläche neben dem Rasthaken. Bei fortgesetzter Zugkraft ist das Abwärtsschwenken des Rasthakens nicht mehr behindert, so dass er von der Rastnase freikommt und die Kupplung deaktiviert. Damit lässt sich die erfindungsgemäße Kupplung ausschließlich während des Verschwenkungsvorgangs ohne zusätzliche Aktoren sowohl koppeln als auch entkoppeln.

Das Prinzip der Erfindung wird nachfolgend anhand einer Zeichnung beispielshalber noch näher erläutert. In der Zeichnung zeigen:
- Figur 1:: einen Brühkammerträger samt Brühkammer, eine Gewindespindel und einen unteren Gehäuseabschnitt in einer Explosionsdarstellung,
- Figur 2:: die Brühkammer und den Brühkammerträger in einer unteren Position auf einer im unteren Gehäuseteil gelagerten Gewindespindel,
- Figur 3:: die gesamte Brühgruppe einschließlich dem Gehäuseunterteil und dem Gehäuseoberteil,
- Figur 4:: eine schematische Abfolge der Aktivierung und der Deaktivierung der erfindungsgemäßen Rastkupplung.

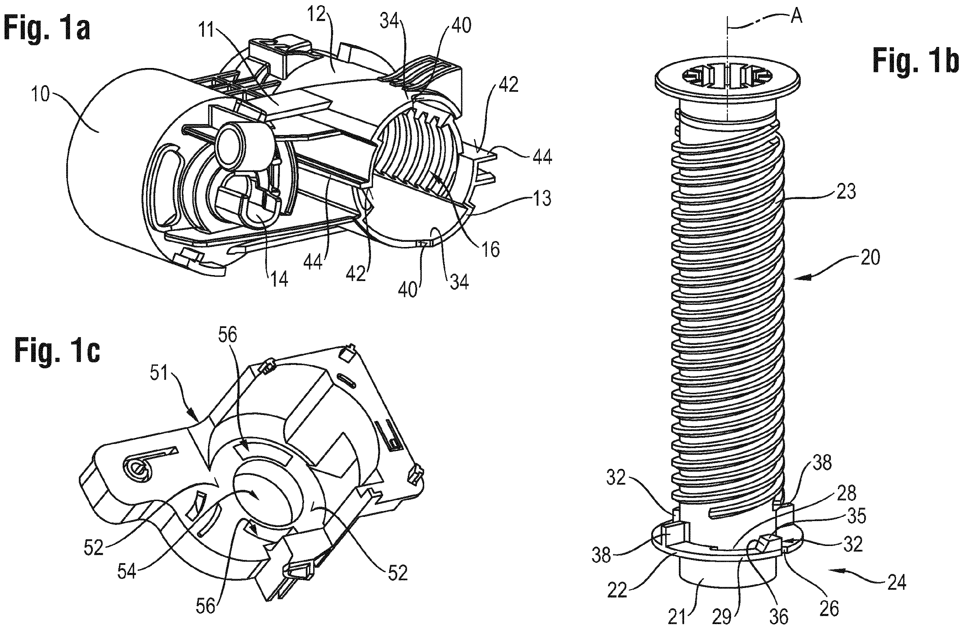

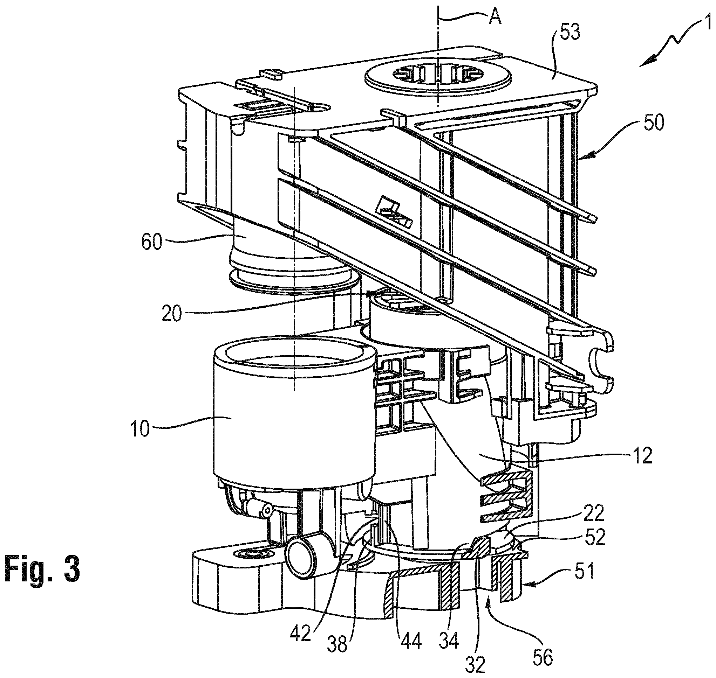

Figur 1 zeigt die erfindungsgemäß betroffenen Hauptbestandteile einer Spindelbrüheinheit, nämlich in Figur 1a eine zylindrische Brühkammer 10, die über einen Verbindungsarm 11 an einem ebenfalls zylindrischen Brühkammerträger 12 sitzt, eine Gewindespindel 20 in Figur 1b und in Figur 1c ein Unterteil 51 eines Gehäuses 50 (Figur 3). Die Brühkammer 10 und der Brühkammerträger 12 in Figur 1a sind in einer Schräg-Unteransicht dargestellt, so dass der Blick auf einen Brühkammerauslass 14 und auf ein Innengewinde 16 des Brühkammerträgers 12 fällt, der als Spindelmutter auf der Gewindespindel 20 dient. An einem unteren Rand 13 seines Innengewindes 16 weist der Brühkammerträger 12 zwei Rastnasen 34 auf, die über schräge Kontaktflächen 40 verfügen. Die Rastnasen 34 sind am unteren Rand 13 des Brühkammerträgers 12 ausgebildet, indem seine zylindrische Mantelfläche dort in axialer Richtung stufenförmig abgesetzt verspringt. Der Versprung an der Rastnase 34 ist nicht rechtwinklig, sondern verläuft schräg, wodurch die schräge Kontaktfläche 40 entsteht.

Ebenfalls am unteren Rand 13 des Brühkammerträgers 12 und um einen Winkel von etwa 90° gegenüber den Rastnasen 34 versetzt sind zwei weitere, diesmal rechtwinklige Versprünge angeordnet, in deren Zuge eine sich axial erstreckende Rippe 44 radial vom Brühkammerträger 12 absteht. Sie bildet eine Schubfläche 42, die der schrägen Kontaktfläche 40 im Umfangsrichtung zugewandt ist. Die Rastnase 34 und die Schubfläche 42 bilden die brühkammerseitigen Bestandteile der erfindungsgemäßen Rastkupplung.

Die Gewindespindel 20 mit ihrer Drehachse A weist gemäß Figur 1b an ihrem unteren Ende 24 einen unteren Lagerstutzen 21 auf, den ein umlaufender Flansch 22 von ihrem Außengewinde 23 trennt. Er trägt auf seiner dem Außengewinde 23 zugewandten Oberseite einander radial gegenüberliegende und vom Flansch 22 in Achsrichtung senkrecht aufragende scheibenförmige Anschläge 38, deren axiale Höhenerstreckungen etwa der Breite des Flanschs 22 entsprechen.

Um jeweils 90° versetzt dazu sitzt auf der Oberseite des Flanschs 22 jeweils ein weitgehend quaderförmiger Rasthaken 32. Er ist federnd gelagert, da der Flansch 22 unmittelbar am Rasthaken 32 durch einen Spalt 26 radial eingeschnitten ist. Von dort führt ein Ringspalt 28 auf der Umfangslinie der Gewindespindel 20 entlang, zwischen dem Rasthaken 32 und der Gewindespindel 20 hindurch über einen Winkel von etwa 45° in Richtung auf den Anschlag 38 zu. Der Flansch 22 bildet damit in diesem Bereich eine gebogene federnde Zunge 29, an deren freien Ende der Rasthaken 32 sitzt. Aus der Dimensionierung des Flanschs 22 bzw. der Zunge 29 hinsichtlich Breite und Dicke sowie aufgrund des Kunststoffmaterials für den Flansch 22 bzw. die Gewindespindel 20 bestimmt sich eine Federhärte der federnden Zunge 29. Auf ihr lässt sich der Rasthaken 32 vertikal bzw. in Achsrichtung A in beide Richtungen um einen Betrag von in etwa der Höhe des Rasthakens 32 selbst auslenken.

Der quaderförmige Rasthaken 32 besitzt unter anderen eine flanschparallele Deckfläche 35 und eine dem Spalt 26 abgewandte Schrägfläche 36, deren Neigung mit derjenigen der schrägen Kontaktfläche 40 der Rastnase 34 weitgehend korrespondiert.

Die beiden federnd gelagerten Rasthaken 32 und die beiden Anschläge 38 stellen die spindelseitigen Bestandteile der erfindungsgemäßen Rastkupplung dar.

Figur 1c zeigt schließlich noch das Unterteil 51 des Gehäuses 50 (Figur 3). Es bietet der Gewindespindel 20 eine untere drehbare Lagerung und weist eine im Betrieb nach oben gerichtete bzw. der Spindel 20 und der Brühkammer 10 zugewandte flanschparallele Stützfläche 52 auf. In der Stützfläche 52 ist ein kreisrunder Durchbruch als Lageröffnung 54 angebracht, in der der untere Lagerstutzen 21 der Gewindespindel 20 einsetzbar und dann darin drehbar gehalten ist. Der Flansch 22 liegt dann mit geringem Abstand über der Stützfläche 52. Sie trägt außerdem zwei mit der Lageröffnung 54 konzentrisch gebogene Aussparungen 56, deren radiale Breite diejenige des Flanschs 22 geringfügig übertrifft. Die beiden Aussparungen 56 liegen sich bezüglich des Zentrums der Lageröffnung 54 weitgehend gegenüber und decken jeweils einen Schwenkwinkel von ca. 45° ab. Weitere Bestandteile des Unterteils 51 des Gehäuses 50 dienen u. a. der Montage mit einem Oberteil 53 (vgl. Figur 3).

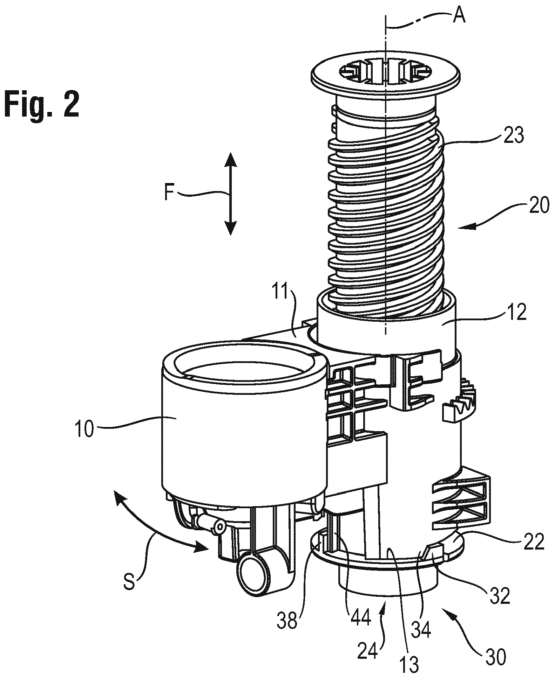

Figur 2 zeigt die Brühkammer 10 bzw. den Brühkammerträger 12 in einer auf der Gewindespindel 20 montierten Position. Das verdeckt angeordnete Innengewinde 16 des Brühkammerträgers 12 kämmt mit dem Außengewinde 23 der Gewindespindel 20. Durch ihre Drehung und eine gleichzeitige rotatorische Blockade der Brühkammer 10 bzw. des Brühkammerträgers 12 lassen jene sich in einer Verfahrrichtung F aufwärts bzw. abwärts verfahren. In der dargestellten Position am unteren Ende 24 der Gewindespindel 20 hat die Brühkammer 10 das untere Ende ihres Verfahrwegs erreicht und befindet sich nun in der Verschwenkposition, von der aus sie sich in einer Verschwenkrichtung S aus- und einschwenken lässt. Der untere Rand 13 des Brühkammerträgers 12 liegt auf dem Flansch 22 der Gewindespindel 20 auf. Die Rastnase 34 und die Schubfläche 42 sowie der Rasthaken 32 und der Anschlag 38 sind so positioniert, dass sie in der dargestellten Position aneinander zu liegen kommen. Sowohl die Schrägfläche 36 des Rasthakens 32 und die Kontaktfläche 40 der Rastnase 34 als auch der Anschlag 38 und die Schubfläche 42 stehen in Berührkontakt. Gleiche Verhältnisse betreffen auch die beiden nicht dargestellten, jeweils gegenüberliegenden Rastmittel 32, 34, 38, 42 am Brühkammerträger 12 bzw. am Flansch 22. Ihre axiale Höhenerstreckung ist in Verbindung mit der Gewindesteigung des Außengewindes 23 und des Innengesindes 16 (Figur 1) derart zu dimensionieren, dass sich die Rastmittel vor Erreichen der Verschwenkposition nicht gegenseitig blockieren.

Figur 3 zeigt die nahezu vollständige Spindelbrüheinheit 1 aus der Brühkammer 10, Gewindespindel 20 und dem Gehäuse 50. Der Brühkammerträger 12 ist betriebsbereit montiert und wie in Figur 2 an dem unteren Ende 24 der Gewindespindel 20 positioniert ist. Die Gewindespindel 20 ist beidseits im Gehäuse 50 aus dem Unterteil 51 und einem Oberteil 53 gelagert. Am Oberteil 53 und koaxial zur Brühkammer 10 ist ein Brühkolben 60 zu erkennen.

Das Unterteil 51 des Gehäuses 50, der Flansch 22 der Gewindespindel 20 und der Brühkammerträger 12 sind teilgeschnitten dargestellt. Dadurch wird die Anordnung der Aussparung 56 (vgl. Figur 1) in der Stützfläche 52 relativ zum Rasthaken 32 deutlich: Sie liegt unmittelbar unter dem Rasthaken 32 und der Zunge 29. Sobald der Rasthaken 32 über einer der beiden Aussparungen 56 liegt und auf Zug belastet wird, kann er grundsätzlich in sie eintauchen und von der Ratnase 34 freikommen. Bei einer Verdrehung der Gewindespindel 20 um 90° gegenüber der gemäß Figur 3 dargestellten Position liegt der Rasthaken 32 über der Stützfläche 52, so dass er nicht abwärts ausgelenkt werden kann, sondern in seiner Rastposition an der Rastnase 34 und damit in einer aktivierten Position der erfindungsgemäßen Rastkupplung 30 verharrt.

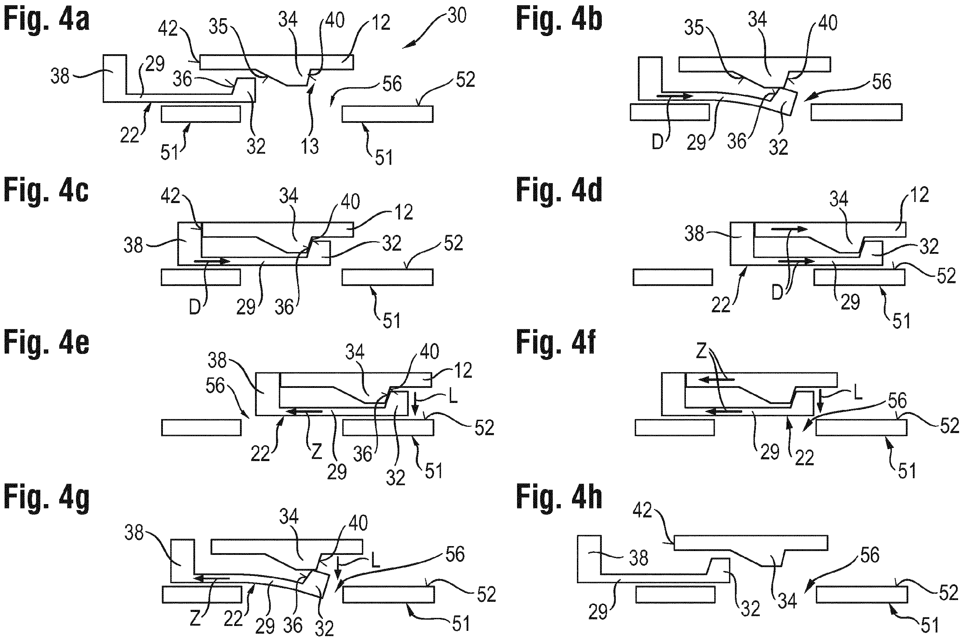

Figur 4 zeigt in acht stark schematisierten Darstellungen 4a bis 4h die wesentlichen Bestandteile der Rastkupplung 30 im Verlauf einer Verschwenkbewegung der Brühkammer 10: An dem unteren Rand 13 des Brühkammerträgers 12 ist die Rastnase 34 mit ihrer schrägen Kontaktfläche 40 und - abweichend von den Figuren 1 bis 3 - mit einer gegenüberliegenden Rampe 35 vereinfacht dargestellt. In der dargestellten Position liegt unter ihr die Aussparung 56 in der Stützfläche 52 des Unterteils 51 des Gehäuses 50 (s. Figur 3). Dazwischen ragt ein Abschnitt des Flanschs 22 der Gewindespindel 20 (vgl. Figuren 1 bis 3) mit der Zunge 29 herein, an deren freien Ende der Rasthaken 32 mit der schrägen Sicherungsfläche 36 sitzt. Am anderen Ende des dargestellten Abschnitts des Flanschs 22 ragt der Anschlag 38 auf. Ihm gegenüber liegt die Schubfläche 42 am Brühkammerträger 12.

Figur 4a zeigt eine Position des Brühkammerträgers 12, in der sich die Brühkammer 10 (Figur 1 bis 3) am Ende einer vertikalen Abwärtsbewegung befindet, die durch eine Verdrehung der Gewindespindel 20 (beide nur in Figur 1 bis 3) hervorgerufen wird. Die Rastnase 34 und die Schubfläche 42 sind noch entfernt von der Rastnase 32 und dem Anschlag 38. Durch weiteres Verdrehen der Gewindespindel 20 in derselben Drehrichtung wie zum Abwärtsfahren der Brühkammer 10 (s. Figuren 1 bis 3) wird der Rasthaken 32 gegen die Rastnase 34 geschoben. An ihrer Rampe 35 gleitet der Rasthaken 32 abwärts und taucht in die Aussparung 56 ein (vgl. Figur 4b). Dabei wird die Zunge 29 verbogen, so dass der Rasthaken 32 bei fortgesetzter Drehung mit seiner Sicherungsfläche 36 hinter die Kontaktfläche 40 der Rastnase 34 schnappt (vgl. Figur 4c) und die Zunge 29 entspannt. Zu diesem Zeitpunkt kommt der Anschlag 38 an der Schubfläche 42 zu liegen und überträgt eine Druckkraft D auf den Brühkammerträger 12.

Figur 4d zeigt die fortgesetzte Drehung der Gewindespindel 20, die durch Anlage des Anschlags 38 am Brühkammerträger 12 die Brühkammer 10 in eine horizontale Drehrichtung mitnimmt. Damit hat die Brühkammer 10 ihre maximale Ausschwenkposition erreicht. Daraufhin kehrt die Gewindespindel 20 (Figuren 1 bis 3) ihre Drehrichtung um.

Figur 4e zeigt das Einschwenken der Brühkammer 10: die Gewindespindel 20 hat ihre Drehrichtung umgekehrt, wodurch eine Zugkraft Z an der Zunge 29 angreift, die den Rasthaken 32 gegen die Rastnase 34 zieht. Wegen der gegenüber der Zugkraftrichtung Z schräg gestellten Sicherungsfläche 36 und Kontaktfläche 40 entsteht eine geringfügige abwärts gerichtete Auslenkkraft L auf den Rasthaken 32, womit er in Deaktivierungsrichtung der Kupplung 30 beaufschlagt wird. Er kann jedoch von der Kontaktfläche 40 nicht abgleiten, weil dieser Bewegung die Stützfläche 52 unterhalb des Rasthakens 32 entgegenwirkt. Damit wird die Brühkammer 10 eingeschwenkt.

Mit fortgesetzter Drehung erreicht der Rasthaken 32 wieder die Aussparung 56 (vgl. Figur 4f). Wie in Figur 4g gezeigt, erlaubt jetzt die Aussparung 56, dass die Kraft L den Rasthaken 32 soweit auslenkt, dass er mit seiner Sicherungsfläche 36 von der Kontaktfläche 40 der Rastnase 34 vollständig abrutscht und in die Aussparung 56 eintaucht. Mit fortgesetzter Drehung der Spindel 20 kommt der Rasthaken 32 vollständig von der Rastnase 34 frei. Damit ist die Kupplung 30 gelöst und der kupplungsgestützte Schwenkvorgang der Brühkammer 10 abgeschlossen. Die Position gemäß Figur 4a ist wieder erreicht, in der die Brühkammer 10 bzw. der Brühkammerträger 12 bei fortgesetzter Drehung der Gewindespindel 20 vertikal aufwärts verfahren werden kann.

### Bezugszeichenliste

- 1: Spindelbrüheinheit
- 10: Brühkammer
- 11: Verbindungsarm
- 12: Brühkammerträger
- 13: unterer Rand
- 14: Brühkammerauslass
- 16: Innengewinde
- 20: Gewindespindel
- 21: unterer Lagerstutzen
- 22: Flansch
- 23: Außengewinde
- 24: unteres Ende
- 26: Spalt
- 28: Ringspalt
- 30: Rastkupplung
- 32: Rasthaken
- 34: Rastnase
- 35: Deckfläche
- 36: Sicherungsfläche
- 38: Anschlag
- 40: Kontaktfläche
- 42: Schubfläche
- 44: Rippe
- 50: Gehäuse
- 51: Unterteil
- 52: Stützfläche
- 53: Oberteil
- 54: Lageröffnung
- 56: Aussparung
- 60: Brühkolben
- A: Spindelachse
- D: Druckkraft
- F: Verfahrrichtung
- L: Auslenkkraft
- S: Verschwenkrichtung
- Z: Zugkraft

## Patentansprüche

1. Kaffeevollautomat, insbesondere für Haushaltszwecke, mit einer Spindelbrüheinheit (1) mit Brühkammer (10), mit einer Gewindespindel (20) zum Antrieb der Brühkammer (10) über einen Brühkammerträger (12) der Brühkammer (10) als Spindelmutter, wobei die Brühkammer (10) seitlich neben der Gewindespindel (20) derart angeordnet ist, dass sie in einer Verschwenkrichtung (S) orthogonal zu der Spindelachse (A) verschwenkbar und in einer Verfahrrichtung (F) parallel zur Spindelachse (A) verfahrbar ist, und mit einer lösbaren Kupplung (30) zwischen der Spindel (20) und der Brühkammer (10), die zum Verschwenken gekoppelt ist, **dadurch gekennzeichnet, dass** die Kupplung (30) für eine selbsttätige Betätigung eingerichtet ist.

2. Kaffeevollautomat nach Anspruch 1, **gekennzeichnet durch** eine formschlüssige Kupplung (30).

3. Kaffeevollautomat nach Anspruch 1 oder 2, **gekennzeichnet durch** Rastmittel (32, 34, 36, 38) als Kupplung (30) zwischen der Spindel (20) und der Brühkammer (10).

4. Kaffeevollautomat nach Anspruch 3 mit einem federnd gelagerten Rasthaken (32) und einer Rastnase (34) als Rastmittel, **gekennzeichnet durch** eine Vorspannung des Rasthakens in einer Deaktivierungsrichtung der Kupplung und durch eine Stützfläche zum Abstützen des Rasthakens zur Aktivierung der Kupplung.

5. Kaffeevollautomat nach Anspruch 3 mit einem federnd gelagerten Rasthaken (32) und einer Rastnase (34) als Rastmittel, **gekennzeichnet durch** eine geneigte Sicherungsfläche (36) am Rastmittel (32, 34) und durch eine Stützfläche (52) zum Abstützen des Rasthakens (32) entweder zur Aktivierung oder zur Deaktivierung der Kupplung (30).

6. Kaffeevollautomat nach Anspruch 5, **gekennzeichnet durch** einen Rasthaken (32) an der Spindel (20) oder an der Brühkammer, der mit einer Rastnase (34) an der Brühkammer (10) oder an der Spindel (20) zusammenwirkt, der zur (De-)Aktivierung der Kupplung (30) auslenkbar gelagert ist und dessen Auslenkbewegung in Abhängigkeit von der Lage der Spindel (20) oder der Brühkammer (10) gehemmt ist.

7. Kaffeevollautomat nach Anspruch 5 mit einem Brühkammerträger (12) als Spindelmutter und einem Gehäuse (50), **gekennzeichnet durch** einen Flansch (22) an einem unteren Ende (24) der Gewindespindel (20), mit einem axial vom Flansch (22) abstehenden Rasthaken (32), der federnd gelagert ist und eine in Umfangsrichtung geneigte Sicherungsfläche (36) aufweist, mit einem axial vom Flansch (22) abstehenden Anschlag (38), und mit einer mit der Schrägfläche (36) korrespondierenden Kontaktfläche (40) und einer mit dem Anschlag (38) zusammenwirkenden Schubfläche (42) am Brühkammerträger (12) als Rastnase und mit einer feststehenden Stützfläche (52) am Gehäuse (50), die eine Auslenkung des Rasthakens (32) blockiert.

8. Kaffeevollautomat nach Anspruch 7, **gekennzeichnet durch** einen zumindest abschnittsweise zugleich als Federlagerung (29) des Rasthakens (32) ausbildeten Flansch (22)

9. Kaffeevollautomat nach Anspruch 7 oder 8, **gekennzeichnet durch** einen Rasthaken, der neben der Übertragung einer Zugkraft auch zur Übertragung einer Druckkraft ausgebildet ist.

## Claims

1. Fully automatic coffee machine, in particular for household use, having a spindle brewing unit (1) with a brewing chamber (10), having a threaded spindle (20) for driving the brewing chamber (10) by means of a brewing chamber support (12) of the brewing chamber (10) as a spindle nut, wherein the brewing chamber (10) is arranged laterally adjacent to the threaded spindle (20) such that it can swivel in a swivel direction (S) orthogonally to the spindle axis (A) and can move in a direction of movement (F) parallel to the spindle axis (A), and is coupled for swivelling with a releasable coupling (30) between the spindle (20) and the brewing chamber (10), **characterised in that** the coupling (30) is designed for automatic actuation.

2. Fully automatic coffee machine according to claim 1, **characterised by** a form-fit coupling (30).

3. Fully automatic coffee machine according to claim 1 or 2, **characterised by** latching means (32, 34, 36, 38) as a coupling (30) between the spindle (20) and the brewing chamber (10).

4. Fully automatic coffee machine according to claim 3 with a spring-mounted latching hook (32) and a detent (34) as latching means, **characterised by** a biasing of the latching hook in a deactivation direction of the coupling and by a support surface for supporting the latching hook to activate the coupling.

5. Fully automatic coffee machine according to claim 3 with a spring-mounted latching hook (32) and a detent (34) as latching means, **characterised by** an inclined securing surface (36) on the latching means (32, 34) and by a support surface (52) for supporting the latching hook (32) either for activation or for deactivation of the coupling (30).

6. Fully automatic coffee machine according to claim 5, **characterised by** a latching hook (32) on the spindle (20) or on the brewing chamber which interacts with a detent (34) on the brewing chamber (10) or on the spindle (20), which is deflectably mounted for (de)activation of the coupling (30) and the deflection movement of which is inhibited as a function of the position of the spindle (20) or of the brewing chamber (10).

7. Fully automatic coffee machine according to claim 5 with a brewing chamber support (12) as a spindle nut and with a housing (50), **characterised by** a flange (22) at a lower end (24) of the threaded spindle (20), with a latching hook (32) which projects axially from the flange (22) and which is spring-mounted, and a securing surface inclined in the circumferential direction (36), with a stop (38) projecting axially from the flange (22), and with a contact surface (40) corresponding to the inclined surface (36) and with a thrust surface (42) on the brewing chamber support (12) interacting with the stop (38) as a detent and with a fixed support surface (52) on the housing (50) which blocks a deflection of the latching hook (32).

8. Fully automatic coffee machine according to claim 7, **characterised by** a flange (22) designed at least in sections simultaneously as a spring bearing (29) of the latching hook (32).

9. Fully automatic coffee machine according to claim 7 or 8, **characterised by** a latching hook which is designed to transmit not only a tensile force but also a compressive force.

## Revendications

1. Machine à café entièrement automatique, notamment à usage domestique, comprenant une unité de percolation à broche (1) dotée d'une chambre de percolation (10), comprenant une broche filetée (20) destinée à entraîner la chambre de percolation (10) par l'intermédiaire d'un support (12) de la chambre de percolation (10) en tant qu'écrou de broche, la chambre de percolation (10) étant disposée latéralement à côté de la broche filetée (20) de manière à ce qu'elle soit pivotante dans une direction de pivotement (S) orthogonalement à l'axe de broche (A) et qu'elle soit déplaçable dans une direction de déplacement (F) parallèlement à l'axe de broche (A), et comprenant un accouplement amovible (30) entre la broche (20) et la chambre de percolation (10), lequel est couplé pour pivoter, **caractérisée en ce que** l'accouplement (30) est configuré pour un actionnement automatique.

2. Machine à café entièrement automatique selon la revendication 1, **caractérisée par** un accouplement (30) à adhérence de forme.

3. Machine à café entièrement automatique selon la revendication 1 ou 2, **caractérisée par** des moyens d'encliquetage (32, 34, 36, 38) en tant qu'accouplement (30) entre la broche (20) et la chambre de percolation (10).

4. Machine à café entièrement automatique selon la revendication 3, comprenant un crochet d'encliquetage (32) logé de manière élastique et un ergot d'encliquetage (34) en tant que moyen d'encliquetage, **caractérisée par** une précontrainte du crochet d'encliquetage dans une direction de désactivation de l'accouplement et par une surface de support destinée à soutenir le crochet d'encliquetage pour l'activation de l'accouplement.

5. Machine à café entièrement automatique selon la revendication 3, comprenant un crochet d'encliquetage (32) logé de manière élastique et un ergot d'encliquetage (34) en tant que moyen d'encliquetage, **caractérisée par** une surface de blocage (36) inclinée sur le moyen d'encliquetage (32, 34) et par une surface de support (52) destinée à soutenir le crochet d'encliquetage (32) soit pour l'activation soit pour la désactivation de l'accouplement (30).

6. Machine à café entièrement automatique selon la revendication 5, **caractérisée par** un crochet d'encliquetage (32) sur la broche (20) ou sur la chambre de percolation, lequel coopère avec un ergot d'encliquetage (34) sur la chambre de percolation (10) ou sur la broche (20), lequel est logé de manière à pouvoir être dévié pour l'activation/la désactivation de l'accouplement (30) et dont le mouvement de déviation est empêché en fonction de la position de la broche (20) ou de la chambre de percolation (10).

7. Machine à café entièrement automatique selon la revendication 5, comprenant un support (12) de chambre de percolation en tant qu'écrou de broche, et un boîtier (50), **caractérisée par** une bride (22) sur une extrémité inférieure (24) de la broche filetée (20), comprenant un crochet d'encliquetage (32) faisant axialement saillie de la bride (22), lequel est logé de manière élastique et présente une surface de blocage (36) inclinée en direction circonférentielle, comprenant une butée (38) faisant axialement saillie de la bride (22), et comprenant une surface de contact (40) correspondant à la surface inclinée (36), et comprenant une surface de poussée (42) sur le support (12) de chambre de percolation, coopérant avec la butée (38), en tant qu'ergot d'encliquetage, et comprenant une surface de support (52) stationnaire sur le boîtier (50), laquelle bloque une déviation du crochet d'encliquetage (32).

8. Machine à café entièrement automatique selon la revendication 7, **caractérisée par** une bride (22) réalisée au moins par endroits en même temps en tant que palier élastique (29) du crochet d'encliquetage (32).

9. Machine à café entièrement automatique selon la revendication 7 ou 8, **caractérisée par** un crochet d'encliquetage qui, outre pour la transmission d'une force de traction, est également réalisé pour la transmission d'une force de pression.
